Europäisches Patentamt

European Patent Office

Office européen des brevets

(19)

(11) Numéro de publication: **0 425 053 A1**

# (12) DEMANDE DE BREVET EUROPEEN

(21) Numéro de dépôt: 90202839.8

(22) Date de dépôt: 24.10.90

(51) Int. Cl.5: **G06F 1/00**

(30) Priorité: 27.10.89 FR 8914144

(43) Date de publication de la demande:
**02.05.91 Bulletin 91/18**

(84) Etats contractants désignés:
**DE ES FR GB IT**

(71) Demandeur: **TRT TELECOMMUNICATIONS
RADIOELECTRIQUES ET TELEPHONIQUES
88 rue Brillat Savarin
F-75013 Paris(FR)**

(84) **FR**

Demandeur: **N.V. Philips'**

**Gloeilampenfabrieken
Groenewoudseweg 1
NL-5621 BA Eindhoven(NL)**
(84) **DE ES GB IT**

(72) Inventeur: **Geffrotin, Bernard, Société Civile
S.P.I.D.
156 Bd Haussmann
F-75008 Paris(FR)**

(74) Mandataire: **Pyronnet, Jacques et al
Société Civile S.P.I.D. 156, Boulevard
Haussmann
F-75008 Paris(FR)**

(54) Système de traitement de données comportant des moyens d'authentification d'une carte à mémoire, circuit électronique à utiliser dans ce système et procédé de mise en oeuvre de cette authentification.

(57) Le micro-ordinateur (PC) est muni d'un lecteur interne (RD) et d'un circuit électronique (3) relié au PC. Le circuit (3) comporte un microprocesseur (MP) relié au PC. Selon l'invention le circuit (3), apte à engendrer un aléa (NA) comporte aussi un circuit de Boot (MCD) générant une durée de temporisation T, un microcircuit de sécurité (PSMC) et un circuit de blocage (CBB). Entre ces éléments, une procédure cryptographique est effectuée, du type DES ou DEA, qui vise à établir la cohérence entre une clé (SK2I) associée à des numéros d'identité dédiés (NI, NOP) de la carte à mémoire (CAM) et une clé (SK2I') associée à un numéro d'identité dédié (NI') correspondant du PC dans le PSMC. Le système est automatiquement bloqué en cas d'incohérence.

Application à la sécurisation de l'accès à un PC.

FIG.1

## SYSTÈME DE TRAITEMENT DE DONNÉES COMPORTANT DES MOYENS D'AUTHENTIFICATION D'UNE CARTE À MÉMOIRE, CIRCUIT ÉLECTRONIQUE À UTILISER DANS CE SYSTÈME ET PROCÉDÉ DE MISE EN OEUVRE DE CETTE AUTHENTIFICATION.

L'invention concerne un système de traitement de données comportant un bus général et un circuit électronique muni de moyens d'authentification pour authentifier une carte à mémoire qui lui est présentée dans un lecteur de carte à mémoire interne, lesdits moyens d'authentification étant connectés de façon bidirectionnelle audit bus général et comportant un microprocesseur connecté audit bus général et audit lecteur de carte à mémoire interne.

L'invention concerne aussi un procédé pour mettre en oeuvre une telle authentification et un circuit se présentant sous une forme identifiable, telle qu'une carte de circuit imprimé ou qu'un boîtier de circuit intégré, pour réaliser l'interface avec ledit bus général et pour effectuer ladite authentification. Le système peut être notamment un système de traitement de données isolé de capacité modeste, tel qu'un ordinateur personnel, un micro-ordinateur, ou bien un poste de travail. Pour ce qui est des possibilités de traitement de données spécifique d'un tel système, il est fait référence aux connaissances générales habituelles dans le domaine.

Le système d'authentification consiste à vérifier, après la mise sous tension d'un micro-ordinateur personnel, PC ou PS, pendant la phase de démarrage (appelée Boot en langue anglaise) et ceci de façon non falsifiable que l'opérateur, détenteur d'une carte à mémoire est bien habilité, par le truchement de cette carte, à travailler sur ce micro-ordinateur.

La sécurisation des systèmes informatiques est un souci constant pour les utilisateurs de ces systèmes mais pendant longtemps elle s'est bornée à limiter l'accès aux locaux des centres de calcul et à protéger les ordinateurs contre les dommages physiques. Avec l'apparition des microprocesseurs et le développement des réseaux de télécommunications, le monde informatique connaît une grande expansion, ces dernières années, qui se matérialise par l'explosion du marché des ordinateurs personnels. Le traitement de données par micro-ordinateurs de type PC ou PS apporte une efficience telle que désormais aucune activité économique ne peut s'envisager sans eux. Mais un micro-ordinateur personnel est très sensible à des utilisations commises par des fraudeurs, telles notamment les attaques actives consistant en la copie illicite, la modification, la destruction de fichiers ou de programmes, ou l'introduction de virus informatiques. Ceci entraîne une perte économique et une atteinte à l'image de marque de la société. Ce problème technique de protection de l'outil informatique existe déjà depuis assez longtemps pour les gros ordinateurs, mais dans ce cas la centralisation facilite le contrôle de l'utilisation. Le problème est fortement accru par l'avènement des PC ; leur nombre, leur autonomie les rendent impossible à surveiller efficacement. On connaît des systèmes selon lesquels l'authentification d'un micro-ordinateur par carte à mémoire consiste, après identification du possesseur de la carte, suite à la reconnaissance du code porteur(CP) de ce dernier, à authentifier cette dernière comme autorisant sélectivement ledit possesseur à utiliser sous certaines conditions ledit micro-ordinateur, par utilisation d'un "mot de passe" émis par l'utilisateur et reconnu par le micro-ordinateur. Ce moyen de procéder, ainsi adapté au problème technique posé est cependant peu sûr et peu commode car le "mot de passe" nécessite un changement fréquent et peut soit avoir été révélé indûment au possesseur de la carte (non habilité) soit être oublié par le possesseur de la carte (habilité). La sécurité des systèmes informatiques peut être grandement améliorée par l'utilisation de techniques cryptographiques qui permettent notamment d'éviter les attaques actives. L'authentification est le moyen pour un opérateur de prouver qu'il est bien celui qu'il a déclaré être, en tant que personne habilitée, pendant l'identification. Dans un contexte cryptographique, cette preuve met en oeuvre un processus cryptographique entre une autorité, notamment un micro-ordinateur personnel, et la carte à mémoire représentant l'opérateur.

Le brevet français 2 549 989 décrit un système d'authentification mutuelle entre un lecteur et une carte à mémoire utilisant un algorithme spécifique non standardisé. Le processus d'authentification, complexe à mettre en oeuvre, apporte un niveau de sécurité basé sur l'emploi de quatre fonctions. Il s'agit là d'un pseudo système à clés publiques car l'authentification s'effectue au moyen de deux clés contenues dans la carte, aucune clé n'étant présente dans le lecteur.

Selon la présente invention le problème est résolu différemment et de façon plus simple grâce au fait que le système de traitement de données défini en préambule est remarquable en ce que lesdits moyens d'authentification comportent un générateur de nombres pseudo-aléatoires (NA), un microcircuit de détection de démarrage (MCD) pour détecter un démarrage et engendrer à cette occasion un premier signal de commande et un microcircuit de sécurité (PSMC) connectés tous deux audit microprocesseur, et un circuit de blocage du bus général (BBC) connecté à la fois audit microprocesseur et audit bus général pour fournir audit bus général un signal de déblocage pendant une durée de retard T amorcée par ledit premier signal de commande, une combinaison dudit microprocesseur, dudit microcircuit de sécurité, dudit lecteur interne, d'un circuit d'interface entre le microprocesseur et le bus général, ainsi que d'autres éléments de traitement de données munis de moyens de réalisation de procédure pour effectuer une procédure d'authentification basée sur un algorithme réversible (ALG, ALG$^{-1}$) qui fait usage dudit nombre pseudo-aléatoire NA, pour établir, outre l'identification d'un porteur de la carte à mémoire, une cohérence entre une première clé (SK2I) associée à des numéros d'identité dédiés (NI, NOP) de la carte à mémoire et une deuxième clé (SK2I') associée à un numéro d'identité dédié correspondant (NI') du système dans le microcircuit de sécurité, et pour engendrer un deuxième signal de commande en cas de cohérence entre lesdites première et deuxième clés, mais, en cas d'incohérence entre lesdites première et deuxième clés, pour engendrer un troisième signal de commande, et ledit système comportant des deuxièmes moyens de détection pour, uniquement sous la commande de l'apparition du deuxième signal de commande avant la fin de ladite durée de retard T, piloter ledit circuit de blocage du bus dans le sens du maintien du signal de déblocage du bus, mais sous commande soit du troisième signal de commande soit de l'apparition de ladite fin de durée, pour faire en sorte que ledit circuit de blocage du bus amorce et maintienne de ce fait un signal de blocage continu du bus.

On obtient ainsi une phase de démarrage sécurisée pour le micro-ordinateur personnel : l'opérateur introduit sa carte à mémoire dans le lecteur intégré au micro-ordinateur puis, après une phase classique d'identification consistant en la vérification du code porteur CP de l'opérateur, la phase d'authentification s'effectue de façon automatique et non falsifiable. La vérification de l'adéquation entre la carte à mémoire et le micro-ordinateur est faite pour l'essentiel par ledit circuit électronique qui est une carte d'extension enfichée dans le micro-ordinateur. L'échec de l'opération bloque le bus. La carte à mémoire contient une zone de service où se trouve le numéro d'identité dédié et une clé associée pour chaque micro-ordinateur, individuel ou en tant qu'appartenant à un groupe, sur lequel (lesquels) l'opérateur possesseur de la carte est habilité à travailler.

Un mode de réalisation préféré de l'invention est remarquable en ce que ledit circuit électronique comporte en outre une mémoire morte du PC constituant une partie de l'EPROM BIOS de ce dernier et reliée de façon bidirectionnelle audit bus général. Le BIOS (Basic Input Output System en langue anglaise) constitue une partie du logiciel de base du micro-ordinateur, tels par exemple la lecture du clavier, l'affichage de l'écran, logiciel qui est indispensable au fonctionnement du micro-ordinateur. En plaçant une partie de l'EPROM BIOS dans le circuit électronique on protège le micro-ordinateur contre une attaque active physique qui consisterait, pour un fraudeur averti, à retirer du micro-ordinateur la carte d'extension et à empêcher ainsi le blocage du bus général par forçage à 1 ou à 0 de bit(s) sur un ou plusieurs fils du bus général.

Selon un autre mode de réalisation préféré de l'invention, ledit nombre pseudo-aléatoire NA est engendré et stocké en mémoire RAM dans ledit PSMC après exécution successive des étapes suivantes d'un programme spécifique du PSMC :

a - une opération logique, notamment l'addition modulo 2 de la clé de fabrication PK et de la clé émetteur MK du PSMC et le stockage en mémoire RAM du PSMC du résultat de l'addition, KMP :

$$PK + MK = KMP$$

b - le chiffrement en ledit nombre pseudo-aléatoire MA d'un message d'entrée ME, unique, engendré par le PSMC, qui se modifie à chaque utilisation spécifique de ce dernier, au moyen d'un algorithme réversible (ALG, ALG$^{-1}$) sous la clé KMP :

$$NA = ALG_{KMP}(ME).$$

Le microcircuit de sécurité (PSMC) est tout à fait semblable au microcircuit d'une carte à mémoire son support, par contre est différent : le PSMC est encapsulé dans un boîtier dont les broches de connexion sont soudées sur les pistes du circuit électronique. Le fait que le PSMC engendre lui-même les nombres pseudo-aléatoires NA et qu'il effectue de façon interne une partie des calculs cryptographiques suivis de comparaison de cryptogrammes confère au système d'authentification un degré encore accru de sécurité et de confidentialité.

La procédure cryptographique servant à l'authentification peut consister en l'exécution successive des étapes suivantes au moyen d'un programme spécifique :

a - la transmission à la carte à mémoire du nombre pseudoaléatoire NA engendré par le PSMC ou par le microprocesseur,

b - le chiffrement sous la clé SK2I associée au numéro d'identité NI de la carte à mémoire, du nombre pseudo-aléatoire NA, dans la carte à mémoire :

$$M1 = ALG_{SK2I}(NA)$$

c - la transmission du cryptogramme M1, de la carte à mémoire au PSMC,

d - le déchiffrement, dans le PSMC, sous la clé SK2I′ associée au numéro d'identité NI′ du PSMC, du cryptogramme M1 :

NA′ = ALG⁻¹$_{SK2I′}$(MI)

e - la comparaison des nombres NA et NA′, l'égalité de ces nombres impliquant l'égalité entre les clés SK2I et SK2I′ associées aux numéros d'identité NI et NI′ respectivement et prouvant l'authenticité de la carte à mémoire ainsi que l'habilitation de son possesseur à utiliser le PC dont le PSMC porte le numéro d'identité NI′.

La procédure cryptographique utilisée pour la mise en oeuvre de l'invention peut être plus élaborée de façon à permettre d'avoir des numéros d'identité dédiés à l'authentification différents dans le PSMC, c'est-à-dire dans le micro-ordinateur, et dans la carte à mémoire ; cette procédure cryptographique est remarquable en ce que elle consiste en l'exécution successive des étapes suivantes au moyen d'un programme spécifique du système :

a - la transmission à la carte à mémoire du nombre pseudo-aléatoire NA engendré par le PSMC ou par le microprocesseur,

b - le chiffrement, dans la carte à mémoire, sous la clé SK2I associée au numéro d'identité NOP et au numéro d'identité NI de la carte à mémoire, du nombre pseudo-aléatoire NA :

M1 = ALG$_{SK2I}$(NA)

c - la transmission du cryptogramme résultant M1 et du numéro d'identité NOP, de la carte à mémoire au PSMC,

d - le calcul cryptographique, dans le PSMC, d'une clé déduite du numéro d'identité NOP de la carte à mémoire :

SKOP = ALG⁻¹$_{SK2I′}$(NOP)

e - le déchiffrement sous la clé SKOP, dans le PSMC, du cryptogramme M1 :

NA′ = ALG⁻¹$_{SKOP}$(M1)

f - la comparaison des nombres NA et NA′, l'égalité de ces nombres impliquant la cohérence entre la clé SK2I associée aux numéros d'identité NOP et NI de la carte à mémoire et la clé SK2I′ associée au numéro d'identité NI′, et prouvant ainsi l'authenticité de la carte à mémoire et l'habilitation de son possesseur à utiliser le PC de numéro d'identité NI′.

Selon cette deuxième procédure cryptographique, il est ainsi possible d'affecter à différentes cartes qui permettent l'utilisation de tel micro-ordinateur, au numéro d'identité NI′, des clés SK2I différentes entre elles car liées à des numéros d'identité dédiés NOP différents entre eux, et différentes de la clé de vérification SK2I′ dans le PSMC, ce qui améliore la sécurité du système.

D'autres avantages divers sont que la durée de retard est de l'ordre de quelques secondes. Pour des raisons ergonomiques ceci n'est pas trop long, ni trop court de façon à permettre à un intrus de répéter la phase de démarrage un grand nombre de fois, chaque fois avec des données d'essai différentes. Par ailleurs, le signal de blocage peut affecter une pluralité de conducteurs de bit du bus général. Ceci procure une interface simple. De manière avantageuse, le signal de blocage de bit est un signal de forçage à basse impédance à une valeur de bit particulière sur n'importe quel conducteur du bus. Ceci est une réalisation simple qui ne nécessite aucune modification d'ordre électromécanique du bus. Le système est avantageusement pourvu d'un port UART qui interconnecte ledit microprocesseur avec ledit bus général. Ceci implique seulement un besoin réduit concernant le nombre de broches de données du microprocesseur disponibles pour le port d'entrée-sortie. De plus, un tel UART est un bloc modulaire standard. Ceci est vrai notamment lorsque l'UART sert d'interface avec une deuxième unité de lecture de carte à mémoire.

Une telle deuxième carte à mémoire (ou la première transposée du premier au deuxième lecteur) représente un périphérique à taille réduite avantageux pour stocker des programmes ou des données. Divers aspects avantageux de l'invention apparaissent à la lecture des revendications dépendantes et de la description.

La description qui suit en regard des dessins annexés, le tout donné à titre d'exemple, fera bien comprendre comment l'invention peut être réalisée.

La figure 1 est un schéma synoptique du système d'authentification selon l'invention.

La figure 2 est le schéma d'un processus d'authentification d'une carte à mémoire par un micro-ordinateur personnel selon l'invention.

La figure 3 est le schéma d'une variante plus élaborée du processus d'authentification de la figure 2.

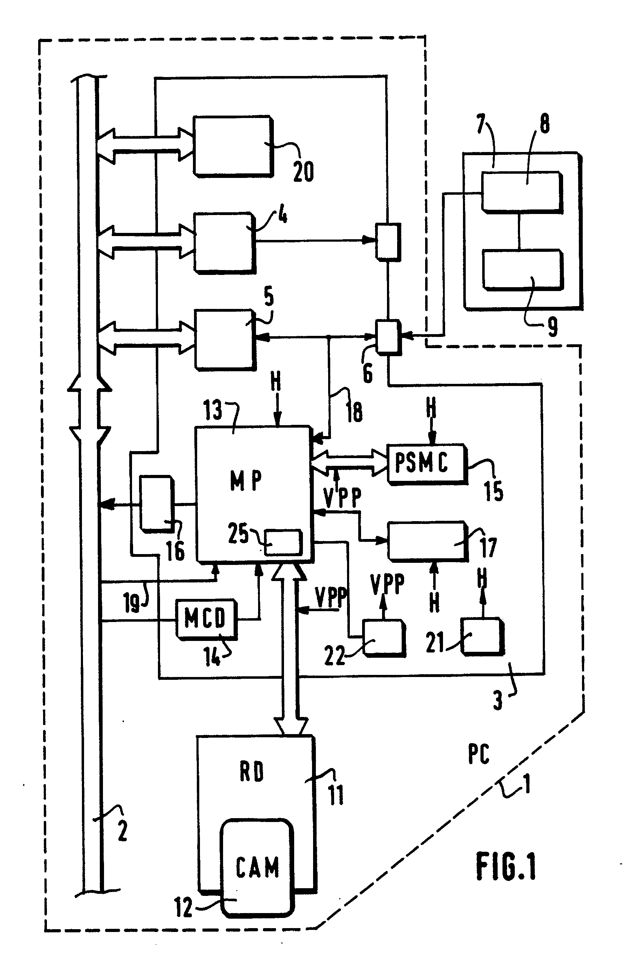

Sur la figure 1 est représenté symboliquement, à l'intérieur d'un trait interrompu 1 un micro-ordinateur personnel du type PC ou PS désigné par PC dans la suite du texte. Ce PC comporte un bus général 2 qui est constitué par les fils de données, d'adresse et de commande. Le PC comporte en outre un circuit électronique 3 sous la forme d'une carte d'extension enfichée dans le PC. De façon connue, la carte 3 est munie de ports d'entrée-sortie tels que des UART 4, 5 qui assurent la liaison entre le PC et des périphériques proches ou distants. Par exemple, l'UART 5 est relié par une interface 6 qui fait une conversion de liaison V28/V24, à un ensemble de lecture distant 7 qui comporte un microprocesseur 8 et un lecteur de carte à mémoire 9. Selon l'invention, le circuit électronique 3 coopère aussi avec un lecteur de carte à mémoire interne au PC (RD). Ce lecteur proche, référencé 11, peut être intégré au PC par exemple à l'emplacement d'une unité de disquette.

Le lecteur 11 est conçu pour recevoir une carte à mémoire (CAM) 12 à des fins d'authentification et plus précisément pour vérifier d'abord si le porteur de la carte 12 en est bien le véritable possesseur (identification) et, dans un deuxième temps pour vérifier si la carte 12 permet l'accès au PC et son utilisation, éventuellement conditionnée, pour partie au moyen de données secrètes et d'un programme spécifique contenus dans la carte (authentification). Pour la coopération entre le circuit 3 et la carte 12, le circuit 3 comporte un microprocesseur 13, un microcircuit de démarrage 14 (MCD) appelé Boot en langue anglaise, un microcircuit de sécurité 15 (PSMC), un circuit de blocage du bus général, 16 (CBB) et, éventuellement, un calendrier 17. Le PSMC, le lecteur 11 et le calendrier 17 sont reliés de façon bidirectionnelle au microprocesseur 13, ce dernier, qui comporte en outre une liaison bidirectionnelle 18 vers l'UART 5 et l'interface 6, recevant des signaux de commande en provenance du bus 2 sur un conducteur 19 (RESET), des signaux de démarrage en provenance du bus 2 par l'intermédiaire du microcircuit de démarrage 14 et pouvant émettre des signaux de blocage du bus 2, par l'intermédiaire du circuit 16, par forçage à 1 ou à 0 d'un ou plusieurs fils de commande du bus 2. Selon un mode de réalisation particulier de l'invention qui est décrit plus loin, le circuit électronique 3 comporte une partie de la mémoire EPROM BIOS du PC, référencée 20 et reliée de façon bidirectionnelle au bus 2. Un générateur d'horloge 21 envoie un signal de base de temps H au microprocesseur 13, au PSMC 15 et au calendrier 17 ; un circuit d'alimentation 22 envoie un signal de tension de programmation VPP aux bus qui relient le microprocesseur au PSMC et au lecteur interne 11 respectivement. Ce circuit d'alimentation est contrôlé par le microprocesseur 13.

Le microprocesseur 13 et/ou le PSMC 15 est (sont) apte(s) à engendrer des nombres pseudo-aléatoires successifs NA destinés, de façon générale connue, à être utilisés dans des processus cryptographiques pour sécuriser l'utilisation du PC. De préférence, c'est le PSMC lui-même, de par sa vocation à assurer les fonctions de sécurité, qui comporte des moyens pour engendrer les nombres pseudo-aléatoires NA comme décrit plus loin. Le microcircuit de démarrage PCD, 14, outre sa fonction connue qui consiste à charger le logiciel principal du circuit électronique 3, est conçu pour déclencher une temporisation, de durée T de l'ordre de quelques secondes juste après la mise sous tension du PC et le signal de remise à l'état initial (RESET) sur le conducteur 19, durée pendant laquelle le bus général 2 est maintenu débloqué. Pendant le temps T, une procédure classique d'identification du porteur de la carte à mémoire 12, suivie, selon l'invention, d'une procédure cryptographique automatique d'authentification, en cas de succès de la procédure d'identification précédente, doivent avoir abouti pour que le bus 2 soit maintenu à l'état débloqué, c'est-à-dire en pratique pour que le conducteur de sortie simple ou multiple du circuit de blocage 16 soit maintenu en état de haute impédance. Si les procédures en question ne sont pas terminées à la fin de la durée T ou si l'une au moins s'est terminée par un résultat faux, le microprocesseur 13 provoque, par l'intermédiaire du circuit de blocage 16, le forçage à la valeur "1" ou à la valeur "0" d'un ou plusieurs conducteurs du bus général 2. L'ensemble des procédures précitées s'effectue au moyen de techniques cryptographiques qui traitent entre autres, à chaque demande d'authentification, un nombre pseudo-aléatoire NA et se déroulent sous la commande d'un programme spécifique réparti entre la carte 12, le lecteur 11, le microprocesseur 13, le PSMC 15 et le PC 1. La procédure automatique d'authentification, décrite plus loin, vise à établir la cohérence entre une clé liée aux numéros d'identité de l'opérateur NOP et numéro d'identité du PC autorisé NI et contenue dans la carte à mémoire, et une clé liée au numéro d'identité NI$'$ contenue dans le PSMC. A chaque numéro d'identité est associée une clé secrète notée SK2I pour NI, NOP et SK2I$'$ pour NI$'$. Il existe une relation entre SK2I$'$, NOP et SK2I telle que la connaissance de SK2I$'$ permet le calcul de SK2I à partir du numéro d'identité NOP mais telle que la connaissance de SK2I ne permet pas de calculer la clé SK2I$'$. Selon une première variante de la procédure d'authentification, le résultat à obtenir est l'égalité des clés SK2I et SK2I$'$. Selon une deuxième variante plus élaborée, le résultat à obtenir est la cohérence cryptographique entre les clés SK2I et SK2I$'$, par vérification de la validité de la clé SK2I pouvant être associée à la clé SKOP dérivée de la clé secrète SK2I du PSMC.

Pour les procédures cryptographiques précitées, l'algorithme de cryptage réversible utilisé, noté de façon générale ALG pour le chiffrement et ALG$^{-1}$ pour le déchiffrement, est de préférence le système de chiffrement à clé secrète dit : Data Encryption Standard (noté DES pour sa fonction de chiffrement et DES$^{-1}$ pour sa fonction de déchiffrement) décrit dans la publication "Federal Information Processing Standards Publication" (FIPS PUB 46) du 15 janvier 1977 du Bureau National des Standards du Ministère du Commerce américain. Cet algorithme est naturellement présent dans la carte à mémoire 12 pour réaliser des fonctions cryptographiques et protéger des données (voir à ce sujet le brevet FR 2 611 962 au nom de la demanderesse) ; il est aussi présent dans le PSMC 15.

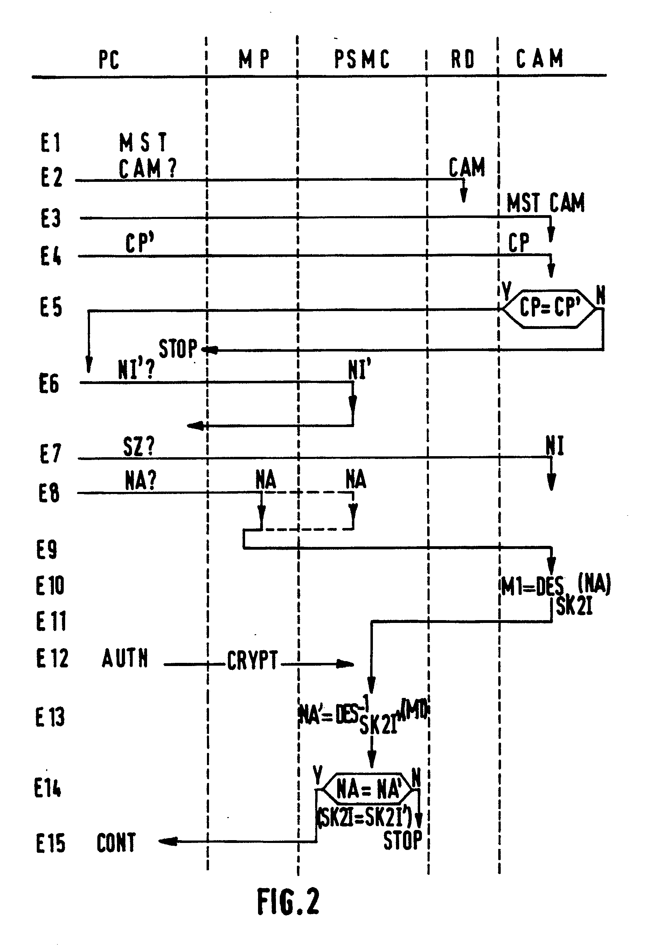

La figure 2 représente les étapes successives E1 à E15 d'une première procédure d'authentification qui caractérisent techniquement l'invention, la procédure d'authentification proprement dite commençant à l'étape E6. On a représenté en haut de la figure 2, en utilisant les mêmes identifiants qu'à la figure 1, les principaux éléments qui interviennent dans la procédure et qui sont : le PC 1, le microprocesseur MP 13, le PSMC 15, le lecteur interne RD 11 et la carte à mémoire CAM 12. Au cours de la procédure, des informations transitent dans l'un ou l'autre sens sur les différents bus et notamment par le conducteur 18 et l'UART 5, d'une façon bien connue de l'informaticien moyen.

A l'étape E1 le PC est mis sous tension (MST). Si, après la détection de démarrage et le début de la temporisation T dans le circuit de démarrage MCD 14 le logiciel du système a correctement démarré, il émane du PC une indication pour l'opérateur d'avoir à introduire sa carte CAM dans le lecteur RD (étape E2). A l'étape E3 la carte, après introduction, est attirée entièrement sous l'action d'un moteur à l'intérieur du lecteur, la carte est mise sous tension (MST CAM) et des paramètres propres à la carte sont transmis au microprocesseur MP (non représenté). A l'étape E4 pour la procédure d'identification, l'opérateur tape, après requête du PC sur le clavier de ce dernier, le code confidentiel porteur $CP'$ qui identifie la carte comme lui appartenant en propre. A l'étape E5, le code porteur CP effectivement contenu dans la carte est comparé, dans la carte, au code $CP'$ qui vient d'être tapé. En cas de différence entre les deux codes porteurs CP et $CP'$ précités (N), l'indication STOP signifie que la procédure est arrêtée, la carte rendue à l'opérateur et que la procédure doit être recommencée à l'étape E1. En cas de trois présentations consécutives fausses du code porteur, le système se bloque et la carte est conservée à l'intérieur du lecteur RD. Si par contre les deux codes porteurs sont égaux (Y), la procédure se poursuit par les étapes E6 à E15, sans autre intervention de l'opérateur, ce qui constitue la procédure d'authentification proprement dite visant à vérifier de façon automatique et non falsifiable l'adéquation entre la CAM et le PC. En E6 le PC interroge le PSMC pour en extraire le numéro d'identification $NI'$, associé à la clé secrète $SK2I'$ et réservé à son authentification. A l'étape E7 une opération semblable à la précédente est effectuée entre le PC et la carte : il est recherché dans la mémoire de données EPROM ou E2PROM de la CAM, dans la zone de service un numéro NI, égal à $NI'$ et associé à la clé secrète SK2I. Ensuite, à l'étape E8, le PC envoie au microprocesseur MP (ou au PSMC) une instruction de demande de génération de nombre pseudo-aléatoire (NA ?). On suppose pour l'instant que c'est le microprocesseur qui fournit le nombre NA et qui comporte à cet effet un générateur de nombre aléatoire d'un type connu (représenté en 25 à la figure 1). A l'étape E9 le nombre NA est disponible dans MP et il est transmis à la carte et, dans le cas présent, au PSMC. En E10 le nombre NA est chiffré, sous la clé SK2I :

$$M_1 = DES_{SK2I}(NA)$$

Le cryptogramme résultant $M_1$ est ensuite transmis, en E11, de la carte au PSMC. A l'étape E12 une instruction de demande d'authentification (AUTN), sous la forme d'un déchiffrement de $M_1$ (CRYPT) est envoyée par le PC au PSMC. Ce déchiffrement est effectué, à l'étape E13 dans le PSMC :

$$NA' = DES^{-1}_{SK2I'}(M_1)$$

A l'étape E14 un test d'égalité entre le nombre NA et le cryptogramme $NA'$ est effectué, dans le PSMC. En cas de différence entre NA et $NA'$ (N) le système se bloque (STOP) c'est-à-dire que le microprocesseur 13 agit sur le bus général 2 par l'intermédiaire du circuit de blocage 16. En cas d'égalité : $MA = NA'$ (Y) on passe à l'étape E15 par laquelle le PSMC indique au microprocesseur et au PC que l'utilisation du PC par l'opérateur peut avoir lieu. En pratique, ceci se traduit par le maintien, au delà de la durée T, des conducteurs de sortie du circuit de blocage 16 en état de haute impédance. L'égalité des nombres NA et $NA'$ implique que la carte CAM et le PSMC ont en commun les clés secrètes SK2I et $SK2I'$, identiques dans les deux microcircuits et donc que la carte est bien authentique dans le sens de : autorisant à se servir du PC.

En pratique, le plus souvent, plusieurs opérateurs sont habilités à utiliser le même PC et pour pouvoir effectuer la procédure selon la figure 2, ils possèdent chacun une carte à mémoire dont la zone de service contient le numéro d'identité NI, égal à $NI'$, et la clé secrète SK2I associée, égale à la clé $SK2I'$ du PSMC. Or, il peut être gênant que plusieurs opérateurs aient, dans leur carte, le même numéro d'identité associé à la même clé secrète, pour l'authentification, cette clé secrète étant en l'occurrence la même que celle du PSMC (c'est-à-dire du PC). Il existe là un risque, assez faible il est vrai, qu'un opérateur puisse reconstituer, suite à un déchiffrement frauduleux la clé secrète du PSMC, et aussi le risque qu'un opérateur puisse se faire passer pour un autre. Pour éviter ces inconvénients, il est avantageux de mettre en oeuvre une procédure d'authentification, plus élaborée que celle de la figure 2, fondée sur le principe que la carte à mémoire de chaque opérateur habilité ne contient pas la clé SK2I du PSMC mais une clé dérivée de cette clé par cryptage, les clés des différentes cartes étant alors différentes entre elles, ainsi que les numéros d'identification correspondants.

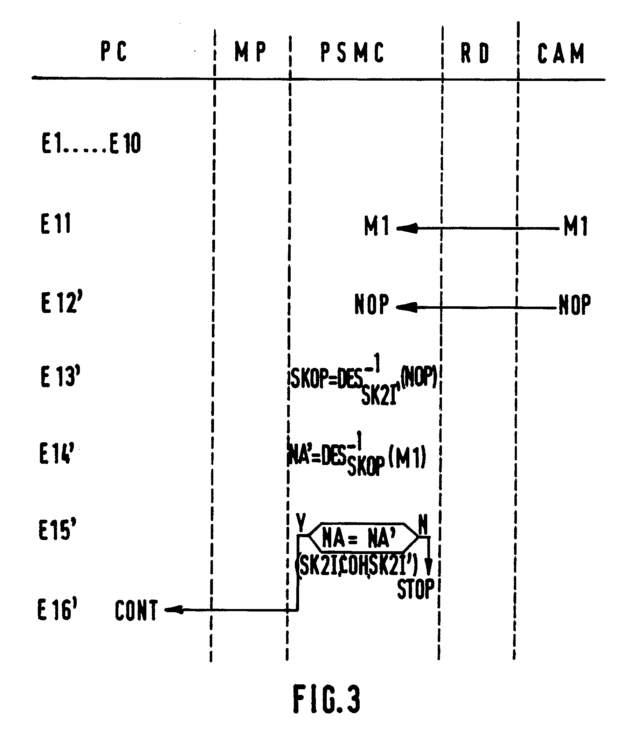

La figure 3 représente cette procédure plus élaborée selon laquelle les premières étapes E1 à E11 sont les mêmes qu'à la figure 2, à ceci près qu'à l'étape E7, il est recherché dans la carte l'un parmi les différents numéros NOP possibles.

A l'étape E11, le cryptogramme $M_1$ est transmis de la carte au PSMC ; à l'étape E12′, le numéro d'identification dédié de la carte, référencé NOP est aussi transmis de la carte au PSMC. L'étape E13′ consiste en le cryptage (déchiffrement) dans le PSMC du numéro NOP sous la clé SK2I′ du PSMC :

SKOP = $DES^{-1}_{SK2I'}$(NOP)

A l'étape E14′, le cryptogramme SKOP qui doit être en fait la clé de la carte associée au numéro d'identité NOP est utilisé pour le déchiffrement, dans le PSMC, du cryptogramme $M_1$ (voir l'étape E10, figure 2) :

$NA' = DES^{-1}_{SKOP}(M_1)$

Le cryptogramme résultant, NA′ doit être égal au nombre pseudo-aléatoire NA, ce qui est testé, à l'étape E15′, semblable à l'étape E14 de la figure 2. Dans le cas présent l'égalité (Y) implique une cohérence ou compatibilité, par le biais d'une technique cryptographique, entre les clés SK2I de la carte et SK2I′ du PSMC et non l'égalité de ces clés. A l'étape E16′ les conséquences du test (Y ou N) sont les mêmes qu'à l'étape E15 de la figure 2.

Pour les procédures d'authentification décrites ci-dessus, on a supposé que le nombre pseudo-aléatoire NA était engendré par le microprocesseur MP. Pour une confidentialité accrue, il est avantageux que ce nombre NA soit engendré par le PSMC lui-même, par exemple de la façon décrite ci-après.

La structure du PSMC, bien connue de l'homme du métier n'est pas représentée aux dessins. On rappelle simplement les principaux éléments de cette structure, nécessaires pour la compréhension de la génération de nombres pseudo-aléatoires. Le microcircuit du PSMC comporte un microprocesseur 8 bits qui incorpore lui-même une mémoire vive RAM. Deux autres mémoires vives (tampon RAM) sont reliées au microprocesseur chacune par un bus bidirectionnel d'adresses, respectivement de données, et sont montées en tampon pour une mémoire de programme ROM et une mémoire de données de type EPROM, la ROM et l'EPROM étant agencées en parallèle. La mémoire EPROM est destinée à recevoir des données comme, notamment, des clés, et est agencée de façon à n'être ni effaçable ni réinscriptible, c'est-à-dire de façon à fonctionner comme une PROM. L'EPROM incorpore des clés de présentation ou clés maîtres et des clés de calcul. Parmi les clés de présentation on distingue notamment une clé de fabrication PK introduite par le fabricant en phase de prépersonnalisation et que le fabricant est seul à connaître, et une clé émetteur MK introduite en phase de personnalisation par l'organisme émetteur de la carte, dit "l'émetteur", par exemple une banque, et que l'émetteur est seul à connaître. La clé PK protège la carte contre des personnalisations non autorisées ; elle est générée à partir d'une carte lot du fabricant.

La mémoire EPROM comporte aussi un numéro de série NS qui a les propriétés d'être lisible sur le boîtier du PSMC, donc non confidentiel, et propre à chaque PSMC.

Le but recherché est d'engendrer de façon simple, au moyen d'un programme spécifique contenu dans la mémoire programme ROM, un nombre pseudo-aléatoire NA dit nombre unique. Pour cela, trois moyens sont appliqués : le premier moyen consiste à combiner en mémoire RAM du microprocesseur du PSMC les deux clés PK et MK en effectuant entre elles une opération logique, de préférence l'addition bit à bit OU exclusif (addition modulo 2) :

PK + MK = KMP

(PK, MK et KMP comportant le même nombre de bits, par exemple 64).

On obtient ainsi la clé KMP qui ne peut ni être extraite du microcircuit ni être altérée par l'extérieur et n'est donc connue de personne.

Selon le deuxième moyen, la clé KMP est combinée avec un message (nombre) ME engendré par la carte, dit message d'entrée, qui a la propriété principale d'être unique, en se modifiant à chaque utilisation spécifique, et qui ne peut ni être extrait du microcircuit ni être altéré par l'extérieur. Cette combinaison consiste en le chiffrement par un algorithme réversible ALG, $ALGI^{-1}$, sous la clé KMP, du message ME :

$ALG_{KMP}$(ME) = NA

NA : nombre unique (pseudo-aléatoire).

De préférence, l'algorithme de cryptage réversible utilisé est le système de chiffrement à clé secrète bien connu, dit "Data Encryption Standard" (DES, $DES^{-1}$) dont une référence est déjà indiquée ci-dessus, ou "Data Encryption Algorythm" (DEA, $DEA^{-1}$).

Le troisième moyen utilisé pour le procédé de génération du nombre unique NA consiste en l'étape préalable de génération du message d'entrée ME. Ce message ME doit posséder les propriétés suivantes : il doit être différent à chaque mise sous tension, être indépendant du moment de sa requête et être lui-même un nombre unique, c'est-à-dire n'être utilisable qu'une fois, ne jamais se répéter. Parmi de nombreuses solutions qui sont à la portée de l'homme de l'art pour la génération du nombre ME selon les critères précités, on choisit de préférence la solution suivante qui implique la création d'un compteur RAM dans la mémoire RAM par exemple incorporée dans le microprocesseur du PSMC et dont l'état de chargement est désigné par CTRAM, et d'un compteur PROM dans la mémoire de données PROM et dont l'état de chargement est désigné par CTROM ; le mesage d'entrée ME est constitué de trois éléments juxtaposés, en allant des poids forts vers les poids faibles, qui sont :

- le numéro de série du PSMC NS, unique en ce qu'il permet de différencier un PSMC de tous les autres, et qui est introduit en phase de prépersonnalisation (par le fabricant),

- CTRAM, incrémenté à chaque génération de nombre unique NA le compteur RAM 18 étant initialisé à 0 0 ... 0 à chaque mise sous tension du PSMC ou à chaque remise à zéro (RESET),

- CTROM, incrémenté après chaque mise sous tension ou remise à zéro (RESET) si le compteur RAM passe en débordement. Le message d'êntrée ME se présente donc sous la forme :
NS, CTRAM, CTROM.

L'incrémentation (de une ou plusieurs unités) du compteur RAM à chaque génération de nombre pseudo-aléatoire NA assure que le message d'entrée ME varie d'une utilisation spécifique du PSMC à l'utilisation suivante, le microcircuit du PSMC étant supposé sous tension. Le but recherché étant que des séquences identiques de valeurs consécutives du nombre ME ne puissent se produire et étant donné que CTRAM reprend périodiquement la valeur zéro, l'incrémentation (de une ou plusieurs unités) du compteur PROM, notamment lors de la mise sous tension, permet d'éviter cette répétition de séquences identiques indésirable.

Par ailleurs, si un fraudeur essaie d'épuiser les possibilités de comptage du compteur RAM en faisant engendrer systématiquement par le PSMC des nombres NA successifs sans débranchement ni remise à zéro du microcircuit, lorsque le compteur RAM revient à zéro après débordement (overflow), suite à plusieurs dizaines de milliers d'essais, une séquence de nombre ME différente de celle correspondant aux premiers essais apparaît à cause de l'incrémentation du compteur PROM lors du passage en débordement de la RAM. De cette manière, il est impossible pour quiconque de prévoir et donc d'engendrer de l'extérieur du microcircuit du PSMC un nombre NA identique à un nombre NA déjà engendré par le PSMC, lors d'une utilisation spécifique de cernier à des fins d'authentification, ce qui empêche toute possibilité de fraude.

Les modes de réalisation de l'invention décrits ci-dessus visent à protéger le PC contre une utilisation frauduleuse basée sur des manipulations autres que physiques. On notera cependant qu'il serait possible, pour un fraudeur averti et décidé de démonter (retirer) la carte-circuit électronique 3 du PC pour empêcher le blocage du bus général 2 par forçage à une certaine valeur logique de certains conducteurs par l'intermédiaire du circuit de blocage 16. Selon une variante de l'invention, il est possible de parer à de telles attaques physiques ên introduisant dans la carte 3 une partie du logiciel de base du PC contenu dans une PROM et représenté en 20 sur la figure 1. Ce logiciel de base, dit BIOS en langue anglaise, qui sert notamment à la lecture du clavier, à l'affichage de l'écran, est indispensable au fonctionnement du PC.

En liaison avec la procédure d'authentification proprement dite, le programme spécifique de la carte peut être adapté pour effectuer des contrôles supplémentaires concernant les droits d'utilisation de l'opérateur, tels que :

- plages horaires d'utilisation liées aux jours de la semaine, ces plages étant réglées par le calendrier 17 (figure 1),

- privilèges comme par exemple l'autorisation d'impression ou de copie sur disquette.

De même qu'il est possible à plusieurs personnes d'accéder à un PC donné comme décrit ci-dessus, l'opération inverse, compatible avec la première, peut s'effectuer simplement tout en utilisant les procédures déjà décrites. Pour permettre à une personne d'accéder à plusieurs PC constituant un groupe, pour des raisons de maintenance par exemple, il suffit d'affecter à chacun de ces PC un même numéro d'identité de groupe associé à une même clé de groupe, chaque PC pouvant conserver par ailleurs ses numéro d'identité et clé associés individuels. De façon symétrique, la personne habilitée pour l'utilisation de tous les PC du groupe possède une carte à mémoire qui comporte un numéro d'identité de groupe du type NI (première procédure) ou du type NOP (deuxième procédure) associé à une clé SK2I, respectivement SKOP, ces données étant à leur tour compatibles avec des données semblables affectées à tel ou tel autre PC, individuellement.

L'invention n'est pas strictement limitée à l'authentification d'une carte à microcircuit par un ordinateur personnel mais peut se transposer, à un niveau plus général, à l'authentification d'un premier matériel informatique du type carte à microcircuit par un deuxième matériel informatique, notamment l'authentification d'un micro-ordinateur personnel muni d'un microcircuit de sécurité par un Serveur (ou un ordinateur hôte) dans un environnement de réseau, comme expliqué ci-dessous et dans le but suivant :

Dans un environnement de réseau, il est important de s'assurer non seulement que l'opérateur est habilité à utiliser un poste de travail, c'est-à-dire un micro-ordinateur personnel (invention proprement dite), et habilité à utiliser une application d'un serveur (fonction classique connue d'authentification classique connue de la carte à mémoire de l'opérateur par le serveur), mais également que l'opérateur travaille à partir d'un micro-ordinateur dont l'accès audit serveur est autorisé.

Cette dernière condition est particulièrement difficile à garantir, surtout dans le cas le plus fréquent où les connexions sont réalisées en utilisant le réseau téléphonique commuté et on se satisfait souvent d'une authentification de l'opérateur par le serveur. Le risque encouru dans ce cas est la fraude réalisée par un opérateur habilité depuis l'extérieur de l'entreprise où se trouve le serveur.

L'invention apporte une solution élégante à ce problème technique tout à fait similaire à celui indiqué au début de l'exposé. Pour réaliser l'authentification du PC par le serveur, selon l'invention, le PSMC doit assumer les fonctions de la CAM et le serveur celles du PSMC. Le PSMC doit être initialisé avec une (ou plusieurs) zones de service supplémentaires réservées aux authentifications par les serveurs. Des clés SKA dans le PSMC et SKA' dans le serveur sont créées, qui sont le pendant des clés SK2I et SK2I' respectivement, ainsi qu'un numéro d'identité NPC dans le serveur pour chaque PC habilité, un nombre pseudo-aléatoire est engendré dans le serveur et un processus d'authentification semblable à celui de la figure 3 permet l'authentification du PC par le serveur. Si les deux nombres pseudo-aléatoires obtenus dans le serveur sont égaux, la communication entre PC et serveur est maintenue ; sinon cette communication est coupée d'autorité. Les clés SKA et SKA' sont différentes. Il existe une relation entre les clés SKA et SKA' telle que SKA puisse être calculée à partir de SKA' et de NPC. Par contre, la connaissance de SKA ne permet pas de calculer SKA'.

**Revendications**

1. Système de traitement de données comportant un bus général et un circuit électronique muni de moyens d'authentification pour authentifier une carte à mémoire qui lui est présentée dans un lecteur de carte à mémoire interne, lesdits moyens d'authentification étant connectés de façon bidirectionnelle audit bus général et comportant un microprocesseur connecté audit bus général et audit lecteur de carte à mémoire interne, caractérisé en ce que lesdits moyens d'authentification comportent un générateur de nombres pseudo-aléatoires (NA), un microcircuit de détection de démarrage (MCD-14) pour détecter un démarrage et engendrer à cette occasion un premier signal de commande et un microcircuit de sécurité (PSMC) connectés tous deux audit microprocesseur, et un circuit de blocage du bus général (BBC) connecté à la fois audit microprocesseur et audit bus général pour fournir audit bus général un signal de déblocage pendant une durée de retard T amorcée par ledit premier signal de commande, une combinaison dudit microprocesseur, dudit microcircuit de sécurité, dudit lecteur interne, d'un circuit d'interface entre le microprocesseur et le bus général, ainsi que d'autres éléments de traitement de données munis de moyens de réalisation de procédure pour effectuer une procédure d'authentification basée sur un algorithme réversible (ALG, ALG$^{-1}$) qui fait usage dudit nombre pseudo-aléatoire MA, pour établir, outre l'identification d'un porteur de la carte à mémoire, une cohérence entre une première clé (SK2I) associée à des numéros d'identité dédiés (NI, NOP) de la carte à mémoire et une deuxième clé (SK2I') associée à un numéro d'identité dédié correspondant (NI') du système dans le microcircuit de sécurité, et pour engendrer un deuxième signal de commande en cas de cohérence entre lesdites première et deuxième clés, mais, en cas d'incohérence entre lesdites première et deuxième clés, pour engendrer un troisième signal de commande, et ledit système comportant des deuxièmes moyens de détection pour, uniquement sous la commande de l'apparition du deuxième signal de commande avant la fin de ladite durée de retard T, piloter ledit circuit de blocage du bus dans le sens du maintien du signal de déblocage du bus, mais sous commande soit du troisième signal de commande soit de l'apparition de ladite fin de durée, pour faire en sorte que ledit circuit de blocage du bus amorce et maintienne de ce fait un signal de blocage continu du bus.

2. Système selon la revendication 1, dans lequel ladite durée de retard est de l'ordre de quelques secondes.

3. Système selon la revendication 1, dans lequel ledit signal de blocage de bus affecte une pluralité de conducteurs de bits dudit bus général.

4. Système selon la revendication 1, 2 ou 3, dans lequel ledit signal de blocage de bus est un signal, à basse impédance, de forçage à une valeur particulière de bit de l'un des conducteurs du bus.

5. Système selon la revendication 1, muni d'un UART qui interconnecte ledit microprocesseur avec ledit bus général.

6. Système selon la revendication 5, dans lequel ledit UART sert d'interface avec un deuxième lecteur de carte à mémoire.

7. Système selon l'une des revendications 1 à 6, caractérisé en ce que ledit circuit électronique comporte en outre une mémoire morte constituant une partie de la mémoire EPROM BIOS du système et qui est reliée de façon bidirectionnelle audit bus général.

8. Système selon l'une des revendications 1 à 7, caractérisé en ce que ledit microprocesseur comporte ledit générateur de nombres pseudo-aléatoires.

9. Circuit électronique à utiliser dans un système tel que revendiqué dans l'une des revendications 1 à 8 et se présentant sous la forme d'une unité identifiable.

10. Procédé de mise en oeuvre du système selon l'une des revendications 1 à 8, caractérisé en ce que ledit nombre pseudo-aléatoire NA est engendré et stocké en mémoire RAM dans ledit PSMC après exécution successive des étapes suivantes d'un programme spécifique du PSMC :

a - une opération logique, notamment l'addition modulo 2 de la clé de fabrication PK et de la clé émetteur MK du PSMC et le stockage en mémoire RAM du PSMC du résultat de l'addition, KMP :

PK + MK = KMP

b - le chiffrement en ledit nombre pseudo-aléatoire NA d'un message d'entrée ME, unique, engendré par le PSMC, qui se modifie à chaque utilisation spécifique de ce dernier, au moyen d'un algorithme réversible (ALG, ALG$^{-1}$) sous la clé KMP :

NA = ALG$_{KMP}$(ME).

11. Procédé pour la mise en oeuvre du système d'authentification selon l'une des revendications 1 à 8, caractérisé en ce que ladite procédure cryptographique consiste en l'exécution successive des étapes suivantes au moyen d'un programme spécifique :

a - la transmission à la carte à mémoire du nombre pseudoaléatoire NA engendré par le PSMC ou par le microprocesseur,

b - le chiffrement sous la clé SK2I associée au numéro d'identité NI de la carte à mémoire, du nombre pseudo-aléatoire NA, dans la carte à mémoire :

M1 = ALG$_{SK2I}$(NA)

c - la transmission du cryptogramme M1, de la carte à mémoire au PSMC,

d - le déchiffrement, dans le PSMC, sous la clé SK2I$'$ associée au numéro d'identité NI$'$ du PSMC, du cryptogramme M1 :

NA$'$ = ALG$^{-1}$$_{SK2I'}$(M1)

e - la comparaison des nombres NA et NA$'$, l'égalité de ces nombres impliquant l'égalité entre les clés SK2I et SK2I$'$ associées aux numéros d'identité NI et NI$'$ respectivement.

12. Procédé pour la mise en oeuvre du système d'authentification selon l'une des revendications 1 à 8, caractérisé en ce que ladite procédure cryptographique consiste en l'exécution successive des étapes suivantes au moyen d'un programme spécifique :

a - la transmission à la carte à mémoire du nombre pseudo-aléatoire NA engendré par le PSMC ou par le microprocesseur,

b - le chiffrement, dans la carte à mémoire, sous la clé SK2I associée au numéro d'identité NOP et au numéro d'identité NI de la carte à mémoire, du nombre pseudo-aléatoire NA :

M1 = ALG$_{SK2I}$(NA)

c - la transmission du cryptogramme résultant M1 et du numéro d'identité NOP, de la carte à mémoire au PSMC,

d - le calcul cryptographique, dans le PSMC, d'une clé déduite du numéro d'identité NOP de la carte à mémoire :

SKOP = ALG$^{-1}$$_{SK2I'}$(NOP)

e - le déchiffrement sous la clé SKOP, dans le PSMC, du cryptogramme M1 :

NA$'$ = ALG$^{-1}$$_{SKOP}$(M1)

f - la comparaison des nombres NA et NA$'$, l'égalité de ces nombres impliquant la cohérence entre la clé SK2I associée aux numéros d'identité NOP et NI de la carte à mémoire et la clé SK2I$'$ associée au numéro d'identité NI$'$ du PSMC.

13. Application du système d'authentification selon l'une des revendications 1 à 8 à l'authentification d'un premier matériel informatique du type PC muni d'un microcircuit par un deuxième matériel informatique du type serveur ou ordinateur hôte.

FIG.1

|  | PC | MP | PSMC | RD | CAM |
|---|---|---|---|---|---|

E1 MST

E2 CAM ? — CAM

E3 MST CAM

E4 CP' CP

E5 Y ⟨CP=CP'⟩ N

STOP

E6 NI'? NI'

E7 SZ? NI

E8 NA? NA NA

E9

E10 M1=DES (NA)
SK2I

E11

E12 AUTN — CRYPT —

E13 NA'=DES⁻¹SK2I(M1)

E14 Y ⟨NA=NA'⟩ N
(SK2I=SK2I')
STOP

E15 CONT

**FIG.2**

| PC | MP | PSMC | RD | CAM |
|---|---|---|---|---|

E1.....E10

E11 ............................................. M1 ◄——— M1

E12' ............................................. NOP ◄——— NOP

E13' ............................................. $SKOP = DES^{-1}_{SK2I}(NOP)$

E14' ............................................. $NA' = DES^{-1}_{SKOP}(M1)$

E15' ............................................. Y ◄NA = NA'► N
(SK2I←OH,SK2I') ↓
STOP

E16' CONT ◄———

## FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0246119 (BULL S.A.)<br>* le document en entier *<br>--- | 1 | G06F1/00 |
| A | WO-A-8803287 (HARCOM SECURITY SYSTEMS CORPORATION)<br>* le document en entier *<br>--- | 1 | |
| A | EP-A-0276450 (XMIT AG)<br>* le document en entier *<br>--- | 1 | |
| A | IBM TECHNICAL DISCLOSURE BULLETIN.<br>vol. 30, no. 2, juillet 1987, NEW YORK US<br>pages 725 - 726;<br>"PERSONAL COMPUTER SECURITY DEVICE"<br>* le document en entier *<br>--- | 1 | |
| D,A | GB-A-2144564 (NV PHILIPS' GLOEILAMPENFABRIEKEN)<br>* le document en entier *<br>& FR-A-2549989<br>--- | 1 | |
| D,A | EP-A-0282123 (T.R.T.)<br>* le document en entier *<br>& FR-A-2611962<br>----- | 1 | **DOMAINES TECHNIQUES RECHERCHES (Int. Cl.5)**<br><br>G06F<br>G07F |

Le présent rapport a été établi pour toutes les revendications

| Lieu de la recherche | Date d'achèvement de la recherche | Examinateur |
|---|---|---|
| BERLIN | 28 NOVEMBRE 1990 | DURAND, J |